# EUROPEAN PATENT SPECIFICATION

(11) **EP 3 978 810 B1**
(45) Date of publication and mention of the grant of the patent: **12.07.2023**
(21) Application number: 20199905.9
(22) Date of filing: 02.10.2020
(51) Int. Cl.: F24C 15/20, B01D 45/08

(54) **FILTER FOR A KITCHEN HOOD AND KITCHEN HOOD COMPRISING SUCH A FILTER**
FILTER FÜR EINE KÜCHENABZUGSHAUBE UND ABZUGSHAUBE MIT EINEM SOLCHEN FILTER
FILTRE POUR UNE HOTTE DE CUISINE ET HOTTE DE CUISINE COMPRENANT UN TEL FILTRE

(43) Date of publication of application: 06.04.2022
(73) Proprietor: Silverline Endüstri ve Ticaret A.S., 05300 Amasya (TR)
(72) Inventor: Ceviksever, Tolga Güven, 05300 Amasya (TR)
(74) Representative: Mutlu, Aydin

(56) References cited:
- EP-A1- 2 099 546
- WO-A1-02/23097
- WO-A1-02/49743
- WO-A2-01/37972
- JP-A- H0 411 913
- JP-A- H1 054 598

## Description

### Technical Field of the Invention

The present invention generally relates to a filter assembly for kitchen hoods. The present invention particularly relates to a detachable filter with a plurality of baffles, disposed in the cooking vapor flow path of a kitchen hood, comprising a grease adsorbing coating layer that attains self-cleaning properties at high temperatures. The filter assembly according to the present invention ensures the high efficiency of the kitchen hood installation in terms of grease adsorption and provides a convenient cleaning operation.

### Background of the Invention

The grease retention performance of hoods is of great importance in terms of general efficiency and compliance with relevant standards. In the state of the art, a wide variety of kitchen hoods and filter assemblies designed for this purpose are available. Said assemblies generally consist of filters cascadingly positioned in the air passage to capture particles of different sizes, wherein one of the filters includes a plurality of baffles and a coating layer thereon. However, these assemblies cannot provide the desired grease retention performance and convenience for cleaning.

One of the typically used assemblies for kitchen hoods is disclosed in CN 206073200 U. The fume purification apparatus disclosed in the document comprises a plurality of baffles and catalytic material disposed within the gas flow path, along with an ultraviolet lamp to trigger the photocatalytic reaction and thus purify the cooking vapor.

Similarly, CN 102121720 A discloses a kitchen hood assembly, provided with a baffle structure, a light emitting tube and a platinum-rhodium coating layer. Such filters have considerably higher initial and operating costs due to the existence of UV light sources and the coating layers have poor grease adsorption since they are designed in such a way to allow and accelerate photocatalytic reactions within the hood. Hence, there remains a need for a filter assembly, which has reasonable initial and operating costs and higher grease adsorption rates, and which is detachable to provide a convenient cleaning operation, for example by means of an oven, thanks to the self-cleaning properties the coating layer attains at high temperatures.

Further relevant prior art is provided by documents EP 2 099 546 A1, JP H04 11913 A and WO 02/23097 A1.

The present invention relates to a detachable filter with a plurality of baffles, coated with a layer which has grease adsorbing properties and self-cleaning properties attained at high temperatures to overcome the shortcomings of the state of the art and to achieve further advantages.

### Brief Description of the Figures

Figure 1 shows a perspective view of the grease filter according to the present invention.
Figure 2 shows a cross sectional perspective view of the grease filter according to the present invention.
Figure 3 shows a cross sectional view of the baffles of the grease filter according to the present invention.
Figure 4 shows a plan view of the grease filter according to the present invention.
Figure 5 shows a perspective view from the bottom of the kitchen hood according to the present invention.
Figure 6 shows a perspective view from the bottom of the kitchen hood according to the present invention without main filters.
Figure 7 shows a cross sectional perspective view of the kitchen hood according to the present invention.
Figure 8 shows a bottom view of the kitchen hood and the grease filter according to the same invention without main filters.

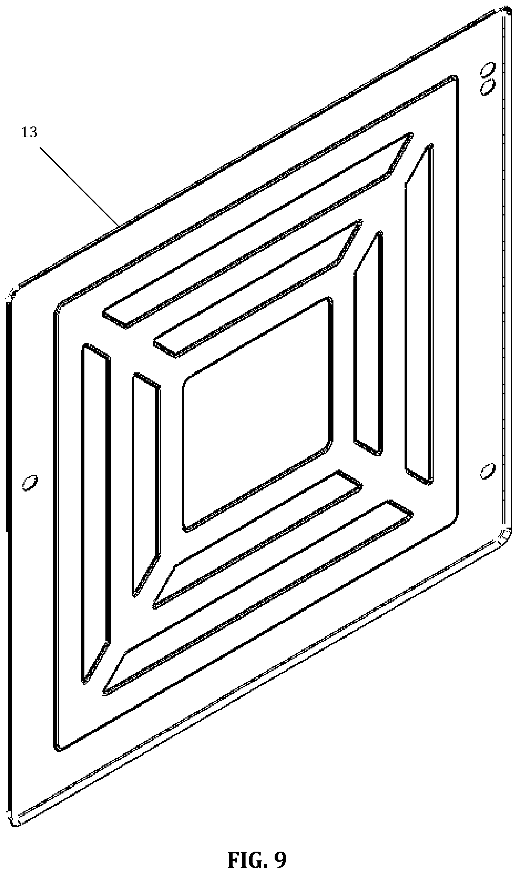

Figure 9 shows a perspective view of the plates according to the present invention.

### Brief Description of the Invention

The present invention relates to a grease filter for detachable installation within an aperture of a kitchen hood overlying a cooking appliance, comprising;
- an external frame,
- a plurality of baffles adapted to be mounted on said external frame at intervals in an opposing manner to form a plurality of inlets and a plurality of outlets, thereby establishing a detour like flow passage for the cooking vapors generated by said cooking appliance, wherein,
- the external frame and/or the baffles comprise(s) an enamel coating layer, and a porous coating layer on top of the enamel coating layer wherein said porous coating layer's chemical composition comprises quartz and one or more metal oxides.

In an advantageous embodiment of the present invention, said baffles comprise oppositely inclined protrusions (21) and a plurality of trapezoidal sections (22) formed by said protrusions (21).

In a particular embodiment of the present invention, said porous coating layer's chemical composition may further comprise one or more of clay, lithium feldspar, boric acid, sodium nitrite and black pigment.

In a preferred embodiment, said metal oxide(s) is/are aluminium oxide and/or non-magnetic iron (III) oxide and/or copper (II) oxide.

According to an advantageous embodiment of the present invention, the amount of quartz is 40-80% by weight, relative to the dry weight of the porous coating layer composition.

In a preferred embodiment of the present invention, the thickness of said porous coating layer is 100-220 microns.

In another aspect, the present invention is directed to a kitchen hood comprising a grease filter for detachable installation within an aperture of a kitchen hood overlying a cooking appliance.

The kitchen hood may further comprise at least one main filter.

In a preferred embodiment of the kitchen hood according to the present invention, said hood may further comprise a plurality of plates, wherein said plates are coated with an enamel coating layer, and a porous coating layer on top of the enamel coating layer, wherein said porous coating layer's chemical composition comprises quartz and one or more metal oxides, and said plates are disposed along the inner walls of said hood in a detachable manner.

### References

- 1.: Grease filter
- 2.: Baffles
- 3.: External frame
- 4.: Inlets of the grease filter
- 5.: Outlets of the grease filter
- 6.: Kitchen hood
- 7.: Housing
- 8.: Lighting means
- 9.: Main filters
- 10.: Fan
- 11.: Fan motor
- 12.: Exhaust
- 13.: Plate
- 14.: Inner wall

### Detailed Description of the Invention

The present invention mainly relates to a grease filter for detachable installation within an aperture of an aspirating kitchen hood overlying a cooking appliance to increase the general grease and gaseous substance retention efficiency of said hood and provide convenience for cleaning. The present invention is disclosed in more detail with reference to different embodiments hereinbelow.

In the state of the art, a wide variety of filters and filter assemblies are used to stop and capture grease and gaseous substances conveyed by cooking appliances. Hereinbelow, all particulate matter and toxic gases that can typically be found in cooking vapors will be referred to as grease, these include but are not limited to substances such as carbon monoxide, nitrogen dioxide, sulfur dioxide, hydrocarbons and volatile organic compounds. Typically, a plurality of baffles is employed within said filters to form a detour-like flow passage for the cooking vapors, ensuring that the particles in cooking vapors shall hit the surface of the filter and thereby be captured. However, the filter arrangements currently in use have low grease retention rate since coatings like titanium dioxide have low grease absorption rate, and comprise a light emitting source such as an UV lamp to degrade harmful particles by means of photocatalytic reactions, therefore these arrangements have considerably higher initial and operating costs. Another drawback of these arrangements is that the light produced by light emitting sources cannot completely cover the surface of baffles, reducing overall degradation performance. Furthermore, the desired level of grease absorption factor by standards such as IEC 61591 cannot be obtained with these arrangements and assemblies. To overcome the shortcomings of said assemblies and the state of the art, a detachable filter with an external frame and a plurality of baffles, coated with an enamel layer and a porous layer comprising quartz and one or more metal oxide is being proposed. Embodiments of the present invention will be disclosed in detail with reference to the drawings.

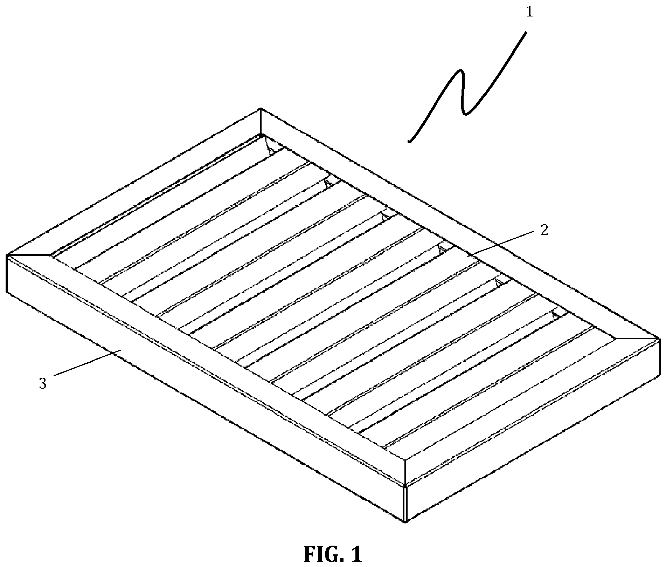

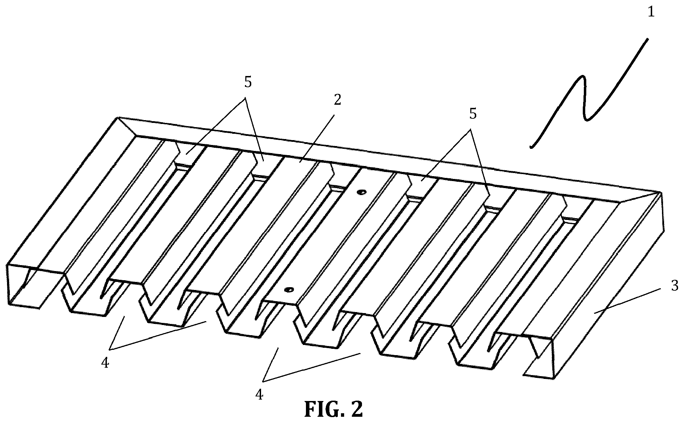

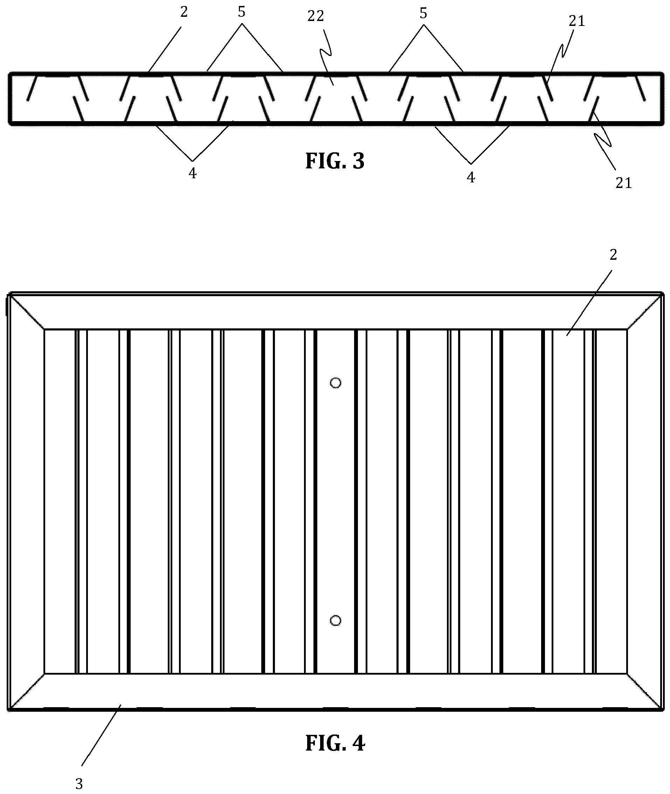

As seen in Fig. 1, Fig. 2, Fig. 3, and Fig. 4 from various perspectives, a grease filter (1) for detachable installation within an aperture of a kitchen hood overlying a cooking appliance (not shown) is given. The grease filter (1) comprises an external frame (3), a plurality of baffles (2) adapted to be mounted on said external frame (3) at intervals in an opposing manner to form a plurality of inlets (4) and a plurality of outlets (5), thereby establishing a detour like flow passage for the cooking vapors generated by said cooking appliance, and the external frame (3) and/or the baffles (2) comprise (s) an enamel coating layer, and a porous coating layer on top of the enamel coating layer wherein said porous coating layer's chemical composition comprises quartz and one or more metal oxides. The shape of the baffles (2) seen in Fig. 3 is merely exemplary and not intended to limit the scope of the invention since said baffles (2) may be of any form and shape as long as it allows a detour like passage for cooking vapors to be obtained. Preferably, the entirety of the filter (1) structure comprises said coating layers and the filter (1) can be made of any heat resistant metal, alloy or material known and used in the state of relevant art. Likewise, a wide variety of mechanisms are available to provide a detachable installation and these shall be apparent to a person skilled in the art, such as a damper mechanism, a simple screw mechanism or a mechanism that allows the filter to be simply pushed towards the ceiling and be removed. As an example, screw holes can be seen in Fig. 2 and Fig. 4. With the coating layer comprising quartz and one or more metal oxides, the filter (1) according to the present invention has a high grease adsorption rate and is able to adsorb and capture harmful substances that occur during cooking sessions. Thus, the objective of the present invention is not to be misunderstood as its purpose is not only to retain the odour particles like carbon activated filters typically do. The filter (1) also provides a convenient cleaning operation since it can be removed and cleaned inside a cooking appliance, such as an oven, thanks to the self-cleaning properties the enamel layer and the porous coating layer attain at high temperatures. For example, depending on the contamination level of the filter (1), 60 minutes at 250 °C will be enough to oxidise and degrade adsorbed pollutants into harmless particles. This process is even more convenient and advantageous in case an oven with catalytic or enamel liners is used to clean the filter (1), considering the hood's filter (1) and the oven's liners can be cleaned simultaneously by means of high temperature. The coating layer does not lose its grease adsorbing properties after the cleaning and can be used normally after multiple cleaning cycles.

In a particular embodiment, baffles (2) of the grease filter (1) may comprise oppositely inclined protrusions and a plurality of trapezoidal sections formed by said protrusions. Said sections are particularly visible in Fig. 3 and this structure allows the filter to efficiently retain the harmful substances in cooking vapors.

In an advantageous embodiment of the present invention, the porous coating layer's chemical composition further comprises one or more of clay, lithium feldspar, boric acid, sodium nitrite and black pigment. More preferably, the composition comprises 5-8% clay, 5-15% lithium feldspar, 0,6-1,5% boric acid, 0,15-0,85% sodium nitrite and 4-8% black pigment, wherein all percentages are given by weight, relative to the total dry weight of the porous coating layer composition. In another preferred embodiment, said metal oxides can be chosen from a group of aluminium oxide, non-magnetic iron (III) oxide and copper (II) oxide. More preferably, the chemical composition comprises 5-17% aluminium oxide, 0,4-2,4% non-magnetic iron (III) oxide and 7-24% copper (II) oxide. Similarly, all percentages are given by weight, relative to the total dry weight of the porous coating layer composition. These advantageous embodiments can be combined to form a homogeneous composition according to the present invention, wherein quartz constitutes rest of the composition. Hence, an exemplary and advantageous composition for the porous coating layer according to the present invention may comprise 7% clay, 10% lithium feldspar, 1% boric acid, 0,5% sodium nitrite, 6% black pigment, 11% aluminium oxide, 1,5% non-magnetic iron (III) oxide, 15% copper (II) oxide and 48% quartz. A method such as powder coating may be used to carry out the coating process after the particle sizes are reduced to the desired value by means of milling/grinding and a homogenous mixture is obtained. The formulations and the coating method are merely exemplary and are not intended to limit the invention and applications thereof. Notwithstanding the examples, other metal oxides may be used at various amounts to produce the filter (1) according to the present invention and the advantageous effects thereof.

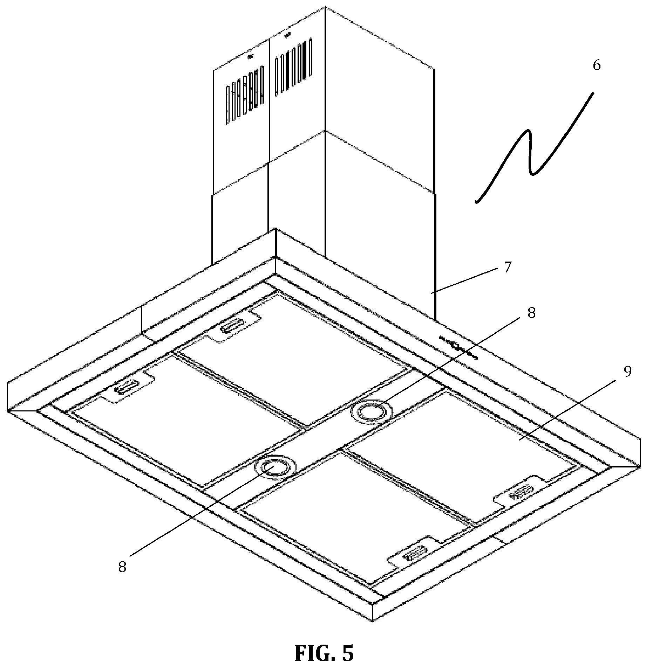

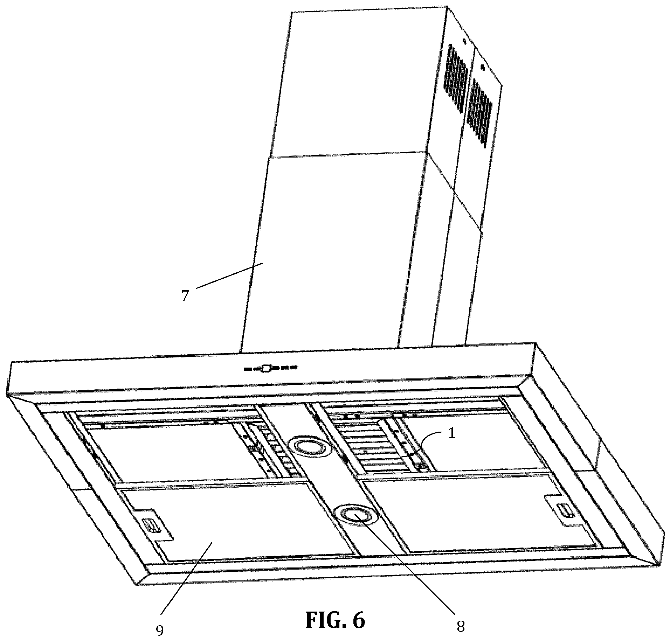

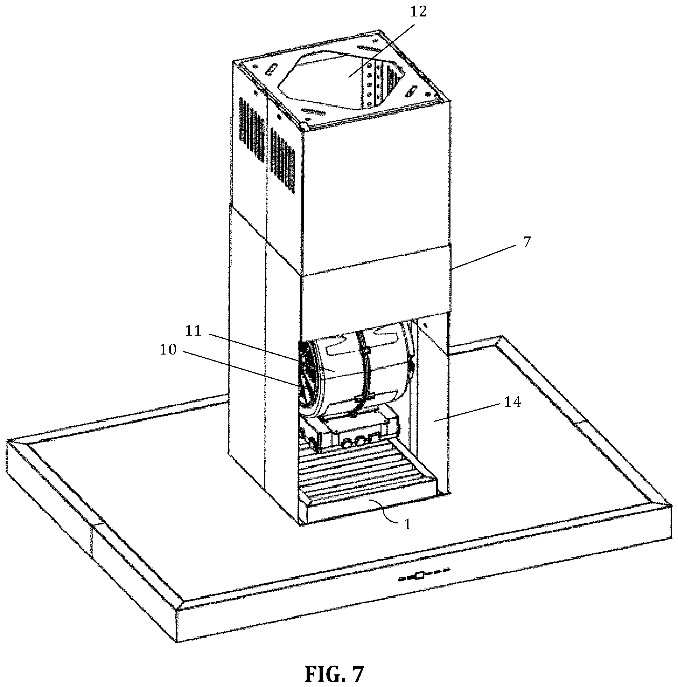

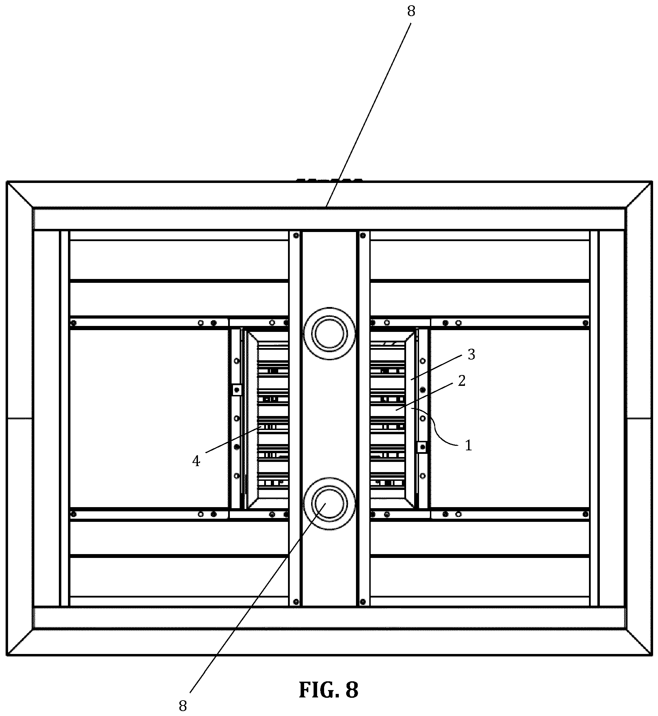

In another aspect, the present invention relates to a kitchen hood (6) comprising a grease filter (1), as seen in Fig. 5, Fig. 6, Fig. 7 and Fig. 8. Fig. 6 and Fig. 8 depict the hood (6) when some or all of the main filters (9) are removed from the housing (7). Preferably, said hood (6) may comprise multiple filters cascadingly positioned along cooking vapors flow path, which is typically formed by the fan (10) and the fan motor (11) of the hood (6). It is found that when the filter (1) according to the present invention is used in combination with at least one main filter (9), which can be seen in Fig. 6 and Fig. 8, the g_{f} value according to IEC 61591 can reach 95% and above, corresponding to A class performance level. Although said main filter(s) (9) is/are preferably a metal mesh screen, it can be of any type as long as its inlet is positioned directly above the cooking appliance in such a way that its outlet directs cooking vapors by means of the negative pressure generated by the fan motor (11) to the inlet (4) of the grease filter (1) according to the present invention. Preferably, lighting means (8) can be used within the housing (7) for convenience and said lighting means (8) can separate main filters (9) from each other in case multiple main filters (9) are used. As can be seen in the figures, the fan (10) and the fan motor (11) are directly above the outlet (5) of the grease filter (1) according to the present invention. Preferably, another filter, for example a HEPA filter, may be employed near the outlet of the fan (10), before cooking vapors reach the exhaust (12) of the hood (6).

In a preferred embodiment of the kitchen hood (6) according to the present invention, the hood (6) may comprise a plurality of plates (13), wherein said plates (13) are coated with an enamel coating layer, and a porous coating layer on top of the enamel coating layer, and are disposed along the inner walls (14) of said hood (6) in a detachable manner. In the same way with the grease filter (1), a simple screw mechanism, a damper mechanism or any appropriate mounting method may be used to achieve detachable installation of the plates (13). The composition of the coating layer used on these plates (13) may or may not be the same as the one used on the grease filter (1), however the desired objective to be achieved and the main components are the same. These detachable plates (13) prevent the accumulation of unwanted and harmful particles on the inner walls (14) of the hood (6), retaining said particles so that they can be degraded within a cooking appliance like an oven after the plates (13) are removed from the housing (7). These plates (13) may also be positioned at the outlet of the grease filter (1), provided there is a plurality of holes thereon to allow the gas to flow towards the exhaust (12) and thus increasing the grease adsorption rate of the assembly. If deemed necessary, said plates (13) and the grease filter (1) according to the present invention can be cleaned simultaneously, saving energy.

## Claims

1. A grease filter (1) for detachable installation within an aperture of a kitchen hood overlying a cooking appliance, the grease filter (1) comprising;
- an external frame (3),
- a plurality of baffles (2) mounted on said external frame (3) with intervals in an opposing manner to form a plurality of inlets (4) and a plurality of outlets (5), thereby establishing a detour like flow passage for the cooking vapors generated by said cooking appliance,
**characterized in that,**
- the external frame (3) and/or the baffles (2) comprise(s) an enamel coating layer, and a porous coating layer on top of the enamel coating layer wherein said porous coating layer's chemical composition comprises quartz and one or more metal oxides.

2. A grease filter (1) according to claim 1 wherein said baffles (2) comprise oppositely inclined protrusions (21) and a plurality of trapezoidal sections (22) formed by said protrusions (21).

3. A grease filter (1) according to claim 1 or 2 wherein said porous coating layer's chemical composition further comprises one or more of clay, lithium feldspar, boric acid, sodium nitrite and black pigment.

4. A grease filter (1) according to any of the preceding claims wherein said metal oxide(s) is/are aluminium oxide and/or non-magnetic iron (III) oxide and/or copper (II) oxide.

5. A grease filter (1) according to any of the preceding claims wherein the amount of quartz is 40-80% by weight, relative to the dry weight of the porous coating layer composition.

6. A grease filter (1) according to any of the preceding claims wherein the thickness of said porous coating layer is 100-220 microns.

7. A kitchen hood (6) comprising a grease filter (1) according to any of the preceding claims.

8. A kitchen hood (6) according to claim 7 wherein the kitchen hood further comprises at least one main filter (9).

9. A kitchen hood according to claim 7 or 8 wherein the kitchen hood further comprises a plurality of plates (13), wherein said plates (13) are coated with an enamel coating layer, and a porous coating layer on top of the enamel coating layer, wherein said porous coating layer's chemical composition comprises quartz and one or more metal oxides, and said plates are disposed along the inner walls (14) of said hood (6) in a detachable manner.

## Patentansprüche

1. Fettfilter (1) zum abnehmbaren Einbau in eine Öffnung einer Dunstabzugshaube über einem Kochgerät, wobei der Fettfilter (1) Folgendes umfasst;
- einen äußeren Rahmen (3),
- eine Vielzahl von Ablenkblechen (2), die an dem äußeren Rahmen (3) in Abständen in entgegengesetzter Weise angebracht sind, um eine Vielzahl von Einlässen (4) und eine Vielzahl von Auslässen (5) zu bilden, wodurch ein umwegartiger Strömungsdurchgang für die von dem Kochgerät erzeugten Kochdämpfe geschaffen wird,
**dadurch gekennzeichnet,**
**dass** der äußere Rahmen (3) und/oder die Ablenkbleche (2) eine Emaille-Beschichtungsschicht und eine poröse Beschichtungsschicht auf der Emaille-Beschichtungsschicht umfassen, wobei die chemische Zusammensetzung der porösen Beschichtungsschicht Quarz und ein oder mehrere Metalloxide umfasst.

2. Fettfilter (1) nach Anspruch 1, wobei die Ablenkbleche (2) entgegengesetzt geneigte Vorsprünge (21) und eine Vielzahl von trapezförmigen Abschnitten (22) umfassen, die durch die Vorsprünge (21) gebildet werden.

3. Fettfilter (1) nach Anspruch 1 oder 2, wobei die chemische Zusammensetzung der porösen Beschichtungsschicht zudem einen oder mehrere der Stoffe Ton, Lithiumfeldspat, Borsäure, Natriumnitrit und Schwarzpigment umfasst.

4. Fettfilter (1) nach einem der vorhergehenden Ansprüche, wobei das/die Metalloxid(e) Aluminiumoxid und/oder nichtmagnetisches Eisen(III)oxid und/oder Kupfer(II)oxid ist/sind.

5. Fettfilter (1) nach einem der vorhergehenden Ansprüche, wobei die Menge an Quarz 40-80 Gew.-%, bezogen auf das Trockengewicht der Zusammensetzung der porösen Beschichtungsschicht, beträgt.

6. Fettfilter (1) nach einem der vorhergehenden Ansprüche, wobei die Dicke der porösen Beschichtungsschicht 100-220 Mikrometer beträgt.

7. Dunstabzugshaube (6) mit einem Fettfilter (1) nach einem der vorhergehenden Ansprüche.

8. Dunstabzugshaube (6) nach Anspruch 7, wobei die Dunstabzugshaube ferner mindestens einen Hauptfilter (9) umfasst.

9. Dunstabzugshaube nach Anspruch 7 oder 8, wobei die Dunstabzugshaube ferner eine Vielzahl von Platten (13) umfasst, wobei die Platten (13) mit einer Emaille-Beschichtungsschicht und einer porösen Beschichtungsschicht auf der Emaille-Beschichtungsschicht beschichtet sind, wobei die chemische Zusammensetzung der porösen Beschichtungsschicht Quarz und ein oder mehrere Metalloxide umfasst, und die Platten entlang der Innenwände (14) der Haube (6) in einer abnehmbaren Weise angeordnet sind.

## Revendications

1. Filtre à graisses (1) pour installation amovible dans une ouverture d'une hotte de cuisine surmontant un équipement de cuisine, le filtre à graisses (1) comprenant :
un cadre extérieur (3),
une pluralité de déflecteurs (2) montés sur ledit cadre extérieur (3) avec des intervalles d'une manière opposée pour former une pluralité d'entrées (4) et une pluralité de sorties (5), établissant ainsi un passage d'écoulement en chicane pour les vapeurs de cuisine générées par ledit équipement de cuisine, **caractérisé en ce que**,
le cadre extérieur (3) et/ou les déflecteurs (2) comprend(nent) un couche de revêtement d'émail, et une couche de revêtement poreux au-dessus du revêtement d'émail dans lequel la composition chimique de ladite couche de revêtement poreux comprend du quartz et un ou plusieurs oxydes métalliques.

2. Filtre à graisses (1) selon la revendication 1 dans lequel lesdits déflecteurs (2) comprennent des saillies inclinées de manière opposée (21) et une pluralité de sections trapézoïdales (22) formées par lesdites saillies (21).

3. Filtre à graisses (1) selon la revendication 1 ou 2 dans lequel la composition chimique de ladite couche de revêtement poreux comprend en outre un ou plusieurs parmi de l'argile, du feldspath lithique, de l'acide borique, du nitrite de sodium et du pigment noir.

4. Filtre à graisses (1) selon l'une quelconque des revendications précédentes dans lequel le(s)dit(s) oxyde(s) métallique(s) est/sont de l'oxyde d'aluminium et/ou de l'oxyde de fer (III) non magnétique et/ou de l'oxyde de cuivre (II).

5. Filtre à graisses (1) selon l'une quelconque des revendications précédentes dans lequel la quantité de quartz est de 40-80% en poids, relativement au poids sec de la composition de couche de revêtement poreux.

6. Filtre à graisses (1) selon l'une quelconque des revendications précédentes dans lequel l'épaisseur de ladite couche de revêtement poreux est de 100-220 microns.

7. Hotte de cuisine (6) comprenant un filtre à graisses (1) selon l'une quelconque des revendications précédentes.

8. Hotte de cuisine (6) selon la revendication 7 dans laquelle la hotte de cuisine comprend en outre au moins un filtre principal (9).

9. Hotte de cuisine (6) selon la revendication 7 ou 8 dans laquelle la hotte de cuisine comprend en outre une pluralité de plaques (13), dans laquelle lesdites plaques (13) sont recouvertes avec une couche de revêtement d'émail, et une couche de revêtement poreux au-dessus de la couche de revêtement d'émail, dans laquelle la composition chimique de ladite couche de revêtement poreux comprend du quartz et un ou plusieurs oxydes métalliques, et lesdites plaques sont disposées le long des parois intérieures (14) de ladite hotte (6) d'une manière amovible.
